(19) **Europäisches Patentamt**

**European Patent Office**

**Office européen des brevets**

(11) **EP 1 469 951 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(51) Int Cl.:
*B05D 3/06* *(2006.01)*    *C08J 3/24* *(2006.01)*
*C09D 4/00* *(2006.01)*

(21) Anmeldenummer: **03731682.5**

(22) Anmeldetag: **21.01.2003**

(86) Internationale Anmeldenummer:
**PCT/EP2003/000539**

(87) Internationale Veröffentlichungsnummer:
**WO 2003/061849 (31.07.2003 Gazette 2003/31)**

(54) **GEHÄRTETE MATERIALIEN, VERFAHREN ZU IHRER HERSTELLUNG UND IHRE VERWENDUNG**

HARDENED MATERIALS, METHOD FOR THE PRODUCTION THEREOF, AND USE THEREOF

MATERIAUX DURCIS, LEUR PROCEDE DE FABRICATION ET LEUR UTILISATION

(84) Benannte Vertragsstaaten:
**AT BE BG CH CY CZ DE DK EE ES FI FR GB GR HU IE IT LI LU MC NL PT SE SI SK TR**

(30) Priorität: **24.01.2002 DE 10202565**

(43) Veröffentlichungstag der Anmeldung:
**27.10.2004 Patentblatt 2004/44**

(73) Patentinhaber: **BASF Coatings AG**
**48165 Münster (DE)**

(72) Erfinder:
• **BAUMGART, Hubert**
**48163 Münster (DE)**
• **MEISENBURG, Uwe**
**47051 Duisburg (DE)**

(74) Vertreter: **Fitzner, Ulrich**
**Dres. Fitzner & Münch**
**Rechts- und Patentanwälte**
**Hauser Ring 10**
**40878 Ratingen (DE)**

(56) Entgegenhaltungen:
**WO-A-01/38427**      **DE-A- 4 336 748**
**DE-A- 10 027 268**      **DE-B- 2 812 083**
**US-A- 6 150 430**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Gebiet der Erfindung

Die vorliegende Erfindung betrifft neue gehärtete Materialien, herstellbar aus thermisch und mit aktinischer Strahlung härtbaren Stoffgemischen. Außerdem betrifft die vorliegende Erfindung ein neues Verfahren zur Herstellung von gehärteten Materialien. Des weiteren betrifft die vorliegende Erfindung die Verwendung der neuen gehärteten Materialien oder der mit Hilfe des neuen Verfahrens hergestellten gehärteten Materialien für das Beschichten, Verkleben, Abdichten, Umhüllen und Verpacken von Kraftfahrzeugkarosserien und Teile hiervon, Bauwerken im Innen- und Außenbereich und Teilen hiervon, Türen, Fenstern, Möbeln, Glashohlkörpern, Coils, Container, Emballagen, Kleinteilen, elektrotechnischen Bauteilen und Bauteilen für weiße Ware.

### Stand der Technik

Die gehärteten Materialien sind vorzugsweise duroplastisch. Im Rahmen der vorliegenden Erfindung werden unter duroplastischen Materialien dreidimensional vernetzte Stoffe verstanden, die im Gegensatz zu thermoplastischen Materialien nur in einem geringen Umfang oder gar nicht mehr in der Hitze verformbar sind.

Im Rahmen der vorliegenden Erfindung wird unter aktinischer Strahlung UV-Strahlung verstanden. Bekanntermaßen wird das Spektrum der UV-Strahlung in drei Bereiche unterteilt:

UV-A: 315 bis 380 nm
UV-B: 315 bis 280 nm
UV-C: 280 bis 100 nm

Im allgemeinen steht das UV-Spektrum von UV-Strahlenquellen nur bis zu einer Wellenlänge von 200 nm zur Verfügung, da die Strahlung einer geringeren Wellenlänge durch die Quarzhohlkörper der Strahlenquellen absorbiert wird (vgl. R. Stephen Davidson, »Exploring the Science, Technology and Applications of U.V. and E.B. Curing«, Sita Technology Ltd., London, 1999, Chapter I, »An Overview«, Seiten 3 bis 34).

Für die Herstellung von gehärteten Materialien, insbesondere Beschichtungen, aus mit aktinischer Strahlung härtbaren Materialien, insbesondere Beschichtungsstoffen, ist es von Vorteil, wenn ein vergleichsweise hoher UV-C-Anteil in der UV-Strahlung vorhanden ist. UV-Strahlung dieser Art wird beispielsweise von den üblichen und bekannten Quecksilberhoch- und -niederdruckdampflampen geliefert (vgl. R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998). Die UV-Strahlung bewirkt eine rasche Durchhärtung der Beschichtungsstoffe und, dadurch bedingt, eine hohe Kratzfestigkeit und Chemikalienbeständigkeit der resultierenden Beschichtungen. Allerdings führt die UV-C-Strahlung zu einer vergleichsweise starken Vergilbung der Beschichtungen, was sich insbesondere bei hellen, insbesondere weißen, farb- und/oder effektgebenden Mehrschichtlackierungen störend bemerkbar macht.

In der internationalen Patentanmeldung WO 94/11123 wird deshalb vorgeschlagen, mit aktinischer Strahlung härtbare Beschichtungsstoffe mit Blitzlichtlampen, deren UV-Strahlung praktisch frei von Strahlung in UV-C-Bereich ist, zu bestrahlen. Nachteilig für dieses Verfahren ist, dass eine Mischung von Fotoinitiatoren eingesetzt werden muss, die genau auf die UV-B- und die UV-A-Strahlung und den hieran angrenzenden sichtbaren Bereich abgestimmt sind. Außerdem muss der Abstand von Blitzlichtlampen und Beschichtungsstoff genau eingestellt werden, und es sind hohe Beleuchtungsstärken von 10 bis 80 Megalux für eine gute Durchhärtung erforderlich. Des weiteren ist dieses Verfahren für großflächige Substrate nicht geeignet, weil eine ausreichende Dosis nur mit Hilfe zahlreicher Blitzlichtlampen bereitgestellt werden kann. Nicht zuletzt sind zahlreiche sequenzielle Belichtungen erforderlich. Nach jedem Blitz müssen aber die Blitzlichtlampen wieder aufgeladen werden, wodurch sich das Verfahren verlängert, was grundsätzlich von Nachteil ist. Ob - und wenn ja, inwieweit - das Fehlen der UV-C-Strahlung außer der Vergilbung das Eigenschaftsprofil der Beschichtungen sonst noch positiv oder negativ beeinflusst, geht aus der internationalen Patentanmeldung nicht hervor.

In der deutschen Patentanmeldung DE 198 18 735 A 1 wird das Verfahren der internationalen Patentanmeldung WO 94/11123 für die Belichtung von Beschichtungsstoffen empfohlen, die thermisch und mit aktinischer Strahlung härtbar sind. Die resultierenden Beschichtungen sollen eine hohe Kratzfestigkeit und eine sehr guter Chemikalien-, Benzin- und Lösemittelbeständigkeit haben. Außerdem sollen sie keine Rißbildung aufweisen, was auf eine gleichmäßige Durchhärtung schließen lassen soll. Die Zwischenschichthaftung soll sehr gut sein, insbesondere die Haftung von thermisch und mit aktinischer Strahlung gehärteten Klarlackierungen auf Basislackierungen. Diese pauschalen Aussagen werden aber weder durch ein Beispiel noch durch die Angaben von Messmethoden konkretisiert. Des weiteren wird nicht angegeben, wie eine hohe Härte bei gleichzeitig sehr guter Kratzfestigkeit erreicht werden kann. Insbesondere geht aus der deutschen Patentanmeldung nicht hervor, dass die Beschichtungen ein Speichermodul E' im gummielastischen Bereich von mindestens $10^{7,5}$ Pa und einen Verlustfaktor tan$\delta$ bei 20 °C von maximal 0,10, wobei das Speichermodul E' und der Verlustfaktor mit der Dynamisch-Mechanischen Thermo-Analyse (DMTA) an freien Filmen mit einer Schichtdicke von 40 $\pm$ 10 $\mu$m gemessen worden sind, haben sollen.

Aus dem deutschen Patent DE 197 09 467 C 2 sind mit aktinischer Strahlung härtbare Beschichtungsstoffe bekannt, die nach ihrer Aushärtung einen Speichermodul E' im gummielastischen Bereich von mindestens $10^{7,5}$ Pa und einen Verlustfaktor tan$\delta$ bei 20 °C von maximal 0,10 aufweisen, wobei das Speichermodul E' und der Verlustfaktor mit der Dynamisch-Mechanischen Thermo-Analyse (DMTA) an freien Filmen mit einer Schichtdicke von 40 $\pm$ 10 $\mu$m gemessen worden sind. Die Strahlenhärtung erfolgt mit UV-Strahlung einer Dosis von 1.800 mJ/cm$^2$; nähere Einzelheiten zur spektralen Verteilung werden nicht angegeben. Die resultierenden Beschichtungen sind kratzfest, gut polierbar, feuchteresistent, witterungs- und chemikalienbeständig und hochglänzend. Es finden sich in dem deutschen Patent keine Hinweise darauf, wie die Vergilbung bei der Strahlenhärtung verhindert und eine hohe Härte bei gleichzeitig sehr guter Kratzfestigkeit eingestellt werden könnte.

In der nicht vorveröffentlichten deutschen Patentanmeldung DE 101 30 972.4 wird ein Verfahren zur Herstellung von Beschichtungen mit hoher Kratzfestigkeit und gleichzeitig hoher Härte aus thermisch und mit aktinischer Strahlung härtbaren Beschichtungsstoffe beschrieben, bei dem man UV-Strahlung einer Dosis von 500 bis 4.000 mJ/cm$^2$ einsetzt. Die Bestrahlung wird unter einer sauerstoffabgereicherten Atmosphäre mit einem maximalen Sauerstoffgehalt von 18 Vol.-% durchgeführt, wobei Quecksilberhoch- und -niederdruckdampflampen verwendet werden. Die Quecksilberdampflampen können noch mit Blei dotiert sein, um ein Strahlenfenster bis 405 nm zu öffnen. Angaben zum Strahlungsspektrum geeigneter Lampen fehlen. Die UV-Härtung kann stufenweise erfolgen. Die thermische Härtung und die Härtung mit aktinischer Strahlung kann gleichzeitig oder sequenziell erfolgen. Vorzugsweise liegt der Gehalt der Beschichtungsstoffe an Fotoinitiatoren, bezogen auf den Festkörper, bei 0,2 bis 8 Gew.%.

## Aufgabe

Aufgabe der vorliegenden Erfindung ist es, neue gehärtete Materialien bereitzustellen, die nur eine geringe Vergilbung aufweisen. Insbesondere soll der Gelbwert nach DIN 6167 < 2 sein.

Die neuen gehärteten Materialien sollen hoch kratzfest sein und nach dem Zerkratzen nur sehr geringe Glanzverluste zeigen. Insbesondere soll der Glanzverlust im Sandtest < 15 Einheiten und im Waschstraßensimulationstest nach Amtec/Kistler vor dem Abwisclien mit Ethanol < 35 Einheiten und nach dem Abwischen mit Ethanol < 10 Einheiten sein.

Gleichzeitig sollen die neuen gehärteten Materialien eine hohe Härte haben. Insbesondere soll die Mikroeindringhärte (Universalhärte bei 25,6 mN, Fischerscope 100V mit Diamantenpyramide nach Vickers) > 100 sein. Nicht zuletzt sollen die neuen gehärteten Materialien eine besonders hohe Chemikalienfestigkeit aufweisen. Insbesondere sollen sie im Gradientenofentest von Daimler durch Schwefelsäure erst ab einer Temperatur von 50 °C geschädigt werden.

Außerdem war es die Aufgabe der vorliegenden Erfindung, ein neues Verfahren bereitzustellen, das gehärtete Materialien liefert, die das vorstehend aufgeführte Anforderungsprofil erfüllen.

## Lösung

Demgemäß wurden die neuen gehärteten Materialien gefunden, herstellbar aus einem thermisch und mit aktinischer Strahlung härtbaren Stoffgemisch durch Erhitzen und Bestrahlung mit UV-Strahlung, wie im Anspruch 26 definiert.

Im folgenden werden die neuen gehärteten Materialien, herstellbar aus einem thermisch und mit aktinischer Strahlung härtbaren Stoffgemisch durch Erhitzen und Bestrahlung mit UV-Strahlung, als »erfindungsgemäße Materialien« bezeichnet.

Außerdem wurde das neue Verfahren zur Herstellung von gehärteten Materialien gefunden, wie im Anspruch 1 definiert.

Im folgenden wird das neue Verfahren zur Herstellung gehärteter Materialien als »erfindungsgemäßes Verfahren« bezeichnet.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zu Grunde lag mit Hilfe der erfindungsgemäßen Materialien und des erfindungsgemäßen Verfahrens gelöst werden konnte.

Insbesondere war es überraschend, dass die erfindungsgemäßen Materialien die Kombination der wesentlichen vorteilhaften Eigenschaften:

- hohe Kratzfestigkeit,
- hohe Härte,
- hohe Chemikalienbeständigkeit und
- geringe Vergilbung

aufwiesen, und dies obwohl die für die Härtung eingesetzte UV-Strahlung einen gewissen UV-C-Anteil aufwies und nicht, wie im Stand der Technik empfohlen, praktisch keinen. Dies ist umso überraschender, als Kratzfestigkeit und Chemikalienbeständigkeit im allgemeinen gegenläufige Eigenschaften sind und der UV-C-Anteil für die Vergilbung hauptsächlich verantwortlich ist.

Außerdem überraschte die außerordentlich breite Verwendbarkeit der erfindungsgemäßen Materialien als Beschichtungen, Klebschichten, Dichtungen, Formteile und Folien, vorzugsweise als Beschichtungen, insbesondere Elektrotauchlackierungen, Füllerlackierungen, Steinschlagschutzgrundierungen, Unidecklackierungen, Basislackierungen und Klarlackierungen. Speziell eigneten sie sich sehr gut für das Beschichten, Verkleben, Abdichten und Verpacken von Kraftfahrzeugkarosserien und Teilen hiervon, Bauwerken im Innen- und Außenbereich und Teilen hiervon, Türen, Fenstern, Möbeln, Glashohlkörpern, Coils, Container, Emballagen, Kleinteilen, wie Muttern, Schrauben, Felgen oder Radkappen, elektrotechnischen Bauteilen, wie Wickelgüter (Spulen, Statoren, Rotoren), und Bauteilen für weiße Ware, wie Radiatoren, Haushaltsgeräte, Kühlschrankverkleidungen oder Waschmaschinenverkleidungen.

## Ausführliche Beschreibung der Erfindung

Die erfindungsgemäßen Materialien können nach unterschiedlichen Verfahren hergestellt werden, solange hierdurch das erfindungsgemäß bezweckte Eigenschaftsprofil eingestellt werden kann. Es ist indes von Vorteil, sie nach dem erfindungsgemäßen Verfahren aus einem thermisch und mit aktinischer Strahlung härtbaren Stoffgemisch durch Erhitzen und Bestrahlung mit UV-Strahlung herzustellen.

Erfindungsgemäß wird hierbei ein thermisch und mit aktinischer Strahlung härtbares Stoffgemisch oder Dual-Cure-Stoffgemisch verwendet, das nach seiner Aushärtung einen Speichermodul E' im gummielastischen Bereich von mindestens $10^{7,5}$, vorzugsweise mindestens $10^{7,6}$, bevorzugt mindestens $10^{8,0}$ und insbesondere mindestens $10^{8,3}$ Pa und einen Verlustfaktor $\tan\delta$ bei 20 °C von maximal 0,10, bevorzugt maximal 0,06, aufweist, wobei das Speichermodul E' und der Verlustfaktor mit der Dynamisch-Mechanischen Thermo-Analyse (DMTA) an freien Filmen mit einer Schichtdicke von $40 \pm 10\ \mu m$ gemessen worden sind.

Der bei einer Deformation eines viskoelastischen Materials wie z.B. eines Polymers wieder zurückzugewinnende Energieanteil (elastischer Anteil) wird durch die Größe des Speichermoduls E' bestimmt, während der bei diesem Vorgang aufgezehrte (dissipierte) Energieanteil durch die Größe des Verlustmoduls E'' beschrieben wird. Die Module E' und E'' sind von der Deformationsgeschwindigkeit und der Temperatur abhängig. Der Verlustfaktor $\tan\delta$ ist definiert als der Quotient aus dem Verlustmodul E'' und dem Speichermodul E'. $\tan\delta$ lässt sich mit Hilfe der Dynamisch-Mechanischen-Thermo-Analyse (DMTA) bestimmen und stellt ein Maß für das Verhältnis zwischen den elastischen und plastischen Eigenschaften des Films dar. Die DMTA ist eine allgemein bekannte Meßmethode zur Bestimmung der viskoelastischen Eigenschaften von Beschichtungen und beispielsweise beschrieben in Murayama, T., Dynamic Mechanical Analysis of Polymeric Materials, Elsevier, New York, 1978 und Loren W. Hill, Journal of Coatings Technology, Vol. 64, No. 808, May 1992, Seiten 31 bis 33. Die Verfahrensbedingungen bei der Messung von $\tan\delta$ mit Hilfe der DMTA werden von Th. Frey, K.-H. Große Brinkhaus und U. Röckrath in Cure Monitoring Of Thermoset Coatings, Progress In Organic Coatings 27 (1996), 59-66, oder in der deutschen Patentanmeldung DE 44 09 715 A 1 oder dem deutschen Patent DE 197 09 467 C 2 im Detail beschrieben. Vorzugsweise werden die folgenden Bedingungen angewandt: Tensile mode; Amplitude: 0,2%; Frequenz: 1 Hz; Temperatur-Rampe: 1°C/min von Raumtemperatur bis 200°C.

Der Speichermodul E' kann vom Fachmann durch die Auswahl bestimmter mit aktinischer Strahlung härtbarer und/oder thermisch härtbarer Bestandteile, der Funktionalität der Bestandteile und ihres Anteils am erfindungsgemäß zu verwendenden Dual-Cure-Stoffgemisch eingestellt werden.

Der erfindungswesentliche Speichermodul E' kann mit Hilfe von mit aktinischer Strahlung härtbaren Bestandteilen in der Regel dadurch eingestellt werden, indem Art und Menge der Bestandteile vorzugsweise so gewählt werden, dass pro g Festkörper des Dual-Cure-Stoffgemischs 0,5 bis 6,0, bevorzugt 1,0 bis 4,0 und besonders bevorzugt 2,0 bis 3,0 mEqu an mit aktinischer Strahlung aktivierbaren Bindungen vorliegen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders bevorzugte Doppelbindungen enthaltende Verbindungen sind Acrylatgruppen enthaltende Verbindungen.

Dabei kann es sich um niedermolekulare Verbindungen handeln, die von der Fachwelt auch als Reaktivverdünner bezeichnet werden (vgl. Römpp Lexikon Lacke und Druckfarben, Georg Thieme Verlag, Stuttgart, New York, 1998, »Reaktivverdünner«, Seiten 491 und 492).

Des weiteren kommen Dimere und Oligomere in Betracht, die vorzugsweise Ester- und/oder Urethangruppen sowie gegebenenfalls freie Isocyanatgruppen enthalten.

Nicht zuletzt können Acrylatgruppen enthaltende Polymere, wie acrylierte (Meth)Acrylat(co)polymerisate, Polyolefine, Polyester, Polyether, Polyurethane, Polyester-polyurethane, Polyether-polyurethane, Polyetherpolyester-polyurethane, Polyamide, Polyamine, Formaldehydharze, insbesondere Melamin-Formaldehydharze, Polyepoxide, Polyharnstoffe oder Polysiloxane, verwendet werden. Die acrylierten Polymere können durch den Einbau flexibilisierender Segmente flexibilisiert werden (vgl. auch das deutschen Patent DE 197 09 467 C 1). Beispiele geeigneter flexibilisierender Segmente sind die nachstehend beschriebenen.

Besonders bevorzugte Reaktivverdünner sind Pentaerythrittetraacrylat oder Dipentaerythritpentaacrylat.

Besonders bevorzugte acrylierte Oligomere und Polymere sind acrylierte Polyacrylate, die beispielsweise durch die polymeranaloge Umsetzung von glycidylgruppenhaltigen Polyacrylaten mit Acrylsäure erhältlich sind (vgl. die europäische Patentanmeldung EP 0 659 979 A 1), sowie acrylierte Polyurethane oder Urethanacrylate, insbesondere von aromatischen Gruppen freie, aliphatische und/oder cycloaliphatische Urethanacrylate, wie sie beispielsweise aus dem deutschen Patent DE 197 09 467 C 1, Seite 5, Zeilen 16 bis 56, bekannt sind. Diese acrylierten Oligomeren und Polymeren werden vorzugsweise als Bindemittel eingesetzt.

Weitere besonders bevorzugte acrylierte Dimere und Oligomere sind die Isocyanatoacrylate. Sie werden vorzugsweise als Vernetzungsmittel eingesetzt.

Besonders bevorzugt werden Isocyanatoacrylate oder Gemische aus Isocyanatoacrylaten verwendet, die

- flexibilisierende Segmente, die als Bestandteil dreidimensionaler Netzwerke deren Glasübergangstemperatur $T_g$ erniedrigen, und
- hartmachende Segmente, die als Bestandteil dreidimensionaler Netzwerke deren Glasübergangstemperatur $T_g$ erhöhen,

enthalten. Ganz besonders bevorzugt wird ein Gemisch aus mindestens einem Isocyanatoacrylat, das flexibilisierende Segmente enthält, und mindestens einem Isocyanatoacrylat, das hartmachende Segmente enthält, verwendet.

Die flexibilisierenden Segmente sind vorzugsweise zweibindige organische Reste. Bevorzugt werden die flexibilisierenden Segmente aus der Gruppe, bestehend aus zweibindigen aliphatischen Kohlenwasserstoffresten und zweibindige, Heteroatome enthaltenden, aliphatischen Kohlenwasserstoffresten, ausgewählt.

Beispiele geeigneter flexibilisierender, zweibindiger organischer Reste dieser Art sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können, sofern die Kohlenstoffketten zwischen den Isocyanatgruppen und den cyclischen Gruppen jeweils mehr als zwei Kohlenstoffatome enthalten.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl).

Weitere Beispiele geeigneter zweibindiger organischer Reste, die Heteroatome enthalten, sind zweiwertige Polyesterreste mit wiederkehrenden Polyesteranteilen der Formel $-(CO-(CHR^1)_m- CH_2-O-)$-aus. Hierbei ist der Index m bevorzugt 4 bis 6 und der Substitutent $R^1$ = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste, die Heteroatome enthalten, sind zweiwertige lineare Polyetherreste, vorzugsweise mit einem zahlenmittleren Molekulargewicht von 400 bis 5.000, insbesondere von 400 bis 3.000. Gut geeignete Polyetherreste haben die allgemeine Formel $-(-O-(CHR^2)_o-)_pO-$, wobei der Substituent $R^2$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste in Betracht.

Als Substitutienten kommen alle organischen funktionellen Gruppen in Betracht, welche im wesentlichen inert sind, d. h., dass sie keine Reaktionen mit den Bestandteilen der erfindungsgemäßen Beschichtungsstoffe eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl-Reste, die keine Substituenten und keine cyclischen Gruppen in der Kohlenstoffkette enthalten, von Vorteil und werden deshalb bevorzugt verwendet.

Die hartmachenden Segmente sind zwei- oder mehrbindige organische Reste. Vorzugsweise werden zweibindige organische Reste verwendet. Daneben können in untergeordneten Mengen mehrbindige, insbesondere dreibindige, organische Reste eingesetzt werden, durch die die Vernetzungsdichte beeinflusst werden kann.

Beispiele gut geeigneter hartmachender Segmente sind

- zweibindige aromatische, cycloaliphatische und aromatischcycloaliphatische Reste, bei denen innerhalb des Isocyanatoacrylats mindestens eine verknüpfende Bindung direkt zur cycloaliphatischen und/oder aromatischen Struktureinheit führt,
- sowie zweibindige aliphatische Reste, bei denen innerhalb des Isocyanatoacrylats die beiden verknüpfenden Bindungen zu Methylengruppen führen, die mit einer aromatischen oder cycloaliphatischen, insbesondere cycloaliphatischen, Struktureinheit verbunden sind.

Die zweibindigen cycloaliphatischen, aromatischen und aliphatischen, insbesondere die cycloaliphatischen, Reste sind vorteilhaft und werden bevorzugt verwendet.

Beispiele geeigneter zweibindiger aromatischer Reste sind substituierte, insbesondere methylsubstituierte, oder unsubstituierte aromatische Reste mit 6 bis 30 Kohlenstoffatomen im Molekül, wie Phen-1,4-, -1,3- oder -1,2-ylen, Naphth-1,4-, -1,3-, -1,2-, -1,5- oder -2,5-ylen, Propan-2,2-di(phen-4'-yl), Methan-di(phen-4'-yl), Diphenyl-4,4'-diyl oder 2,4- oder 2,6-Toluylen .

Beispiele geeigneter zweibindiger cycloaliphatischer Reste sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl. Daneben können in untergeordneten Mengen die entsprechenden Triyl-Reste angewandt werden.

Beispiele geeigneter aliphatischer Reste sind Cyclohexan-1,2-, -1,4- oder - 1,3-bis(methyl).

Beispiele geeigneter Substituenten sind die vorstehend beschriebenen.

Die vorstehend beschriebenen Isocyanatoacrylate sind übliche und bekannte Verbindungen und werden beispielsweise von der Firma Bayer Aktiengesellschaft unter der Marke Roskydal ® UA VPLS 2337 (flexibilisierend) und Roskydal ® UA VP FWO 3003-77 (hartmachend) vertrieben. Vorzugsweise werden sie aus Polyisocyanaten und hydroxylgruppenhaltigen Acrylaten hergestellten (vgl. die europäische Patentanmeldung EP 0 928 800 A 1). Beispiele geeigneter hydroxylgruppenhaltiger Acrylate sind die nachstehend beschriebenen Monomeren (a 1) und/oder (a 2). Beispiele geeigneter Polyisocyanate sind die nachstehend beschriebenen.

Der Speichermodul E' kann vom Fachmann auch über geeignete thermisch härtbare Bestandteile eingestellt werden. Bei der Auswahl der thermisch härtbaren Bestandteile ist es bevorzugt, 5 bis 95, besonders bevorzugt 10 bis 90 und ganz besonders bevorzugt 20 bis 80 Gew.-%, jeweils bezogen auf den in dem Dual-Cure-Stoffgemisch vorliegenden Anteil an thermisch härtbaren Bestandteilen, mindestens eines thermisch härtbaren Bestandteils einzusetzen, der in Bezug auf die thermische Vernetzung eine Funktionalität von > 2 aufweist.

Besonders bevorzugte thermisch härtbare Bestandteile dieser Art sind spezielle hydroxylgruppenhaltige (Meth) Acrylatcopolymerisate, die insbesondere als Bindemittel eingesetzt werden, sowie aliphatische und/oder cycloaliphatische Polyisocyanate und die vorstehend beschriebenen Isocyanatoacrylate, die insbesondere als Vernetzungsmittel eingesetzt werden.

Das thermisch härtbare (Meth)Acrylatcopolymerisat weist vorzugsweise

- eine OH-Zahl von 100 bis 240, bevorzugt in 130 bis 220, besonders bevorzugt 140 bis 190 und insbesondere 145 bis 180 mg KOH/g,

- eine Glasübergangstemperatur Tg von -50 bis +110, bevorzugt -30 bis +80, besonders bevorzugt -30 bis +70, ganz besonders bevorzugt -30 bis +50 und insbesondere -25 bis +40 °C,

- ein zahlenmittleres Molekulargewicht von 1.000 bis 10.000 Dalton, insbesondere 1.500 bis 5.000 Dalton, und

- ein massenmittleres Molekulargewicht von 2.000 bis 40.000 Dalton, insbesondere 3.000 bis 20.000 Dalton, auf.

Das (Meth)Acrylatcopolymerisat enthält eine seiner OH-Zahl entsprechende Menge an hydroxylgruppenhaltigen olefinisch ungesättigten Monomeren einpolymerisiert, wobei die hydroxylgruppenhaltigen Monomeren bevorzugt aus einer Mischung der Monomeren (a 1) und (a 2) bestehen, wovon

(a 1) vorzugsweise 20 bis 90, bevorzugt 22 bis 85, besonders bevorzugt 25 bis 80 und insbesondere 28 bis 75 Gew.-%, jeweils bezogen auf die hydroxylgruppenhaltigen Monomeren, aus der Gruppe, bestehend aus 4-Hydroxybutyl(meth)acrylat, 2-Alkyl-propan-1,3-diol-mono(meth)acrylaten und hydroxylgruppenhaltigen cycloaliphatischen olefinisch ungesättigten Monomeren, und

(a 2) vorzugsweise 20 bis 80, bevorzugt 15 bis 78, besonders bevorzugt 20 bis 75 und insbesondere 25 bis 72 Gew.-%, jeweils bezogen auf die hydroxylgruppenhaltigen Monomeren, aus der Gruppe, bestehend aus sonstigen hydroxylgruppenhaltigen olefinisch ungesättigten Monomeren,

ausgewählt werden.

Beispiele geeigneter 2-Alkyl-propan-1,3-diol-mono(meth)acrylate (a1) sind 2-Methyl-, 2-Ethyl-, 2-Propyl-, 2-Isopropyl- oder 2-n-Butyl-propan-1,3-diol-mono(meth)acrylat, wovon 2-Methyl-propan-1,3-diol-mono(meth)acrylat besonders vorteilhaft ist und bevorzugt verwendet wird.

Beispiele geeigneter hydroxylgruppenhaltiger cycloaliphatischer olefinisch ungesättigter Monomere (a 1) sind hydroxylgruppenhaltige cycloaliphatische (Meth)Acrylate, die vorzugsweise aus der Gruppe, bestehend aus 2-, 3- und 4-Hydroxycyclohexyl(meth)acrylat, Hydroxydicyclopentadienyl(meth)acrylat, 1,4-Bis(hydroxymethyl)cydohexanmono (meth)acrylat oder Octahydro-4,7-methano-1H-inden-dimethanolmono(meth)acrylat, ausgewählt werden.

Beispiele geeigneter sonstiger hydroxylgruppenhaltiger olefinisch ungesättigter Monomere (a 2) sind Hydroxyalkylester von olefinisch ungesättigen Carbon-, Sulfon- und Phosphonsäuren und sauren Phosphor- und Schwefelsäureestern, insbesondere Carbonsäuren, wie Acrylsäure, beta-Carboxyethylacrylat, Methacrylsäure, Ethacrylsäure und Crotonsäure, insbesondere Acrylsäure und Methacrylsäure. Sie leiten sich von einem Alkylenglykol ab, der mit der Säure verestert ist, oder sie sind durch die Umsetzung der Säure mit einem Alkylenoxid wie Ethylenoxid oder Propylenoxid erhältlich. Bevorzugt werden die Hydroxyalkylester, in denen die Hydroxyalkylgruppe bis zu 20 Kohlenstoffatome enthält, verwendet, insbesondere, 2-Hydroxyethyl- oder 3-Hydroxypropylacrylat oder -methacrylat; oder Umsetzungsprodukte aus cyclischen Estern, wie z.B. epsilon-Caprolacton, und diesen Hydroxyalkylestern; oder olefinisch ungesättigte Alkohole wie Allylalkohol; oder Polyole, wie Trimethylolpropanmono- oder diallylether oder Pentaerythritmono-, -di- oder -triallylether; verwendet. Diese höherfunktionellen Monomeren (a 2) werden im allgemeinen nur in untergeordneten Mengen eingesetzt. Im Rahmen der vorliegenden Erfindung sind hierbei unter untergeordneten Mengen an höherfunktionellen Monomeren (a 2) solche Mengen zu verstehen, welche nicht zur Vernetzung oder Gelierung der (Meth)Acrylatcopolymerisate führen, es sei denn, sie sollen in der Form von vernetzten Mikrogelteilchen vorliegen.

Des weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomere (a2) in Betracht. Sofern verwendet, werden sie vorzugsweise nicht als alleinige Monomere (a2), sondern in einer Menge von 0,1 bis 10 Gew.-%, bezogen auf das (Meth)Acrylatcopolymerisat, eingesetzt.

Des weiteren kommen Umsetzungsprodukte aus den vorstehend aufgeführten olefinisch ungesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic®-Säure, oder anstelle der Umsetzungsprodukte eine äquivalenten Menge an den vorstehend aufgeführten olefinisch undgesättigten Säuren, insbesondere Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure (vgl. Römpp Lexikon Lacke und Druckfarben, Georg Thieme Verlag, Stuttgart, New York, 1998, »Versatic®-Säuren«, Seiten 605 und 606), umgesetzt wird.

Nicht zuletzt sind Acryloxysilan-enthaltende Vinylmonomere als Monomere (a 2) geeignet, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere (a 1) und (a 2) herstellbar sind.

Außer den Hydroxylgruppen können die (Meth)acrylatcopolymerisate im statistischen Mittel noch mindestens eine, insbesondere mindestens zwei, übliche und bekannte reaktive funktionelle Gruppe(n), die mit komplementären reaktiven funktionellen Gruppen thermisch initiierte Vernetzungsreaktionen eingehen können, im Molekül enthalten.

Die Auswahl der jeweiligen komplementären reaktiven funktionellen Gruppen richtet sich zum einen danach, dass sie bei der Herstellung der Bindemittel sowie bei der Herstellung, der Lagerung, der Applikation und dem Härtungsprozess keine unerwünschten Reaktionen, insbesondere keine vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Die komplementären reaktiven funktionellen Gruppen können mit Hilfe üblicher und bekannter olefinisch ungesättigter Monomeren (a 3), die die betreffenden reaktiven funktionellen Gruppen enthalten, oder durch übliche und bekannte polymeranaloge Reaktionen in die (Meth)Acrylatcopolymerisate eingeführt werden.

Darüber hinaus können die (Meth)Acrylatcopolymerisate noch mindestens ein olefinisch ungesättigtes Monomer (a 4) enthalten, das im wesentlichen oder völlig frei von reaktiven funktionellen Gruppen ist. Beispiele geeigneter Monomere (a 4) werden in der deutschen Patentanmeldung DE 198 50 243 A 1, Seite 2, Zeilen 54 bis 66, und Seite 3, Zeilen 20 bis 42, beschrieben. Von diesen werden die cycloaliphatischen Monomere (a 4) bevorzugt verwendet. Besonders bevorzugt werden sie aus der Gruppe, bestehend aus Cyclohexyl-, 4-tert.-Butylcyclohexyl-, Isobornyl- oder Dicyclopentadienyl(meth)acrylat, ausgewählt.

Die Monomeren (a 1) und (a 2) sowie (a 3) und/oder (a 4) werden so ausgewählt, dass die vorstehend angegebenen OH-Zahlen und Glasübergangstemperaturen resultieren. Außerdem werden die Monomeren (a 3), die reaktive funktionelle Gruppen enthalten, nach Art und Menge so ausgewählt, dass sie die Vernetzungsreaktionen der Hydroxylgruppen mit den nachstehend beschriebenen Polyisocyanaten oder den vorstehend beschriebenen Isocyanatoacrylaten nicht inhibieren oder völlig verhindern.

Die Auswahl der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden können, vorgenommen werden:

$$1/T_g = \sum_{n=1}^{n=x} W_n/T_{g_n}; \qquad \sum_n W_n = 1$$

$T_g$ = Glasübergangstemperatur des Poly(meth)acrylats;

$W_n$ = Gewichtsanteil des n-ten Monomers;

$T_{g_n}$ = Glasübergangstemperatur des Homopolymers aus dem n-ten Monomer und

$x$ = Anzahl der verschiedenen Monomeren.

Die Herstellung der erfindungsgemäß zu verwendenden (Meth)Acrylatcopolymerisate weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck bei Temperaturen von vorzugsweise 50 bis 200°C.

Geeignete Copolymerisationsverfahren sind allgemein bekannt und brauchen nicht näher erläutert zu werden. Beispielsweise kann die Copolymerisation in Polyolen als Reaktionsmedium durchgeführt werden, wie dies in der deutschen Patentanmeldung DE 198 50 243 A 1 beschrieben wird.

Beispiele geeigneter Initiatoren für die radikalische Copolymerisation sind Dialkylperoxide, Hydroperoxide, Perester, Peroxodisulfate, Azodinitrile, C-C-spaltende Initiatoren oder eine Kombination eines nicht oxidierenden Initiators mit Wasserstoffperoxid.

Besonders gut geeignet sind Dual-Cure-Stoffgemische, die mindestens eines, insbesondere eines, der vorstehend beschriebenen (Meth)Acrylatcopolymerisate als Bindemittel enthalten. In manchen Fällen kann es aber vorteilhaft sein, mindestens zwei, insbesondere zwei, (Meth)Acrylatcopolymerisate zu verwenden, die im Rahmen der vorstehend angegebenen wesentlichen Bereiche für OH-Zahl, Glasübergangstemperatur und zahlen- und massenmittleres Molekulargewicht ein unterschiedliches Eigenschaftsprofil aufweisen.

Als Polyisocyanate kommen alle auf dem Lackgebiet üblicherweise verwendeten so genannten Lackpolyisocyanate in Betracht. Vorzugsweise werden sie aus der Gruppe der aliphatischen, cycloaliphatischen und aliphatisch-cycloaliphatischen Polyisocyanate ausgewählt. Vorzugsweise enthalten sie im statistischen Mittel 2,1 bis 10, insbesondere 2,1 bis 6 Isocyanatgruppen im Molekül. Besonders bevorzugt enthalten sie im statistischen Mittel mindestens eine Isocyanat-, Biuret-, Allophanat-, Iminooxadiazindion-, Urethan-, Harnstoff-, Carbodiimid- und/oder Uretdiongruppe im Molekül. Außerdem kommen hochviskose Polyisocyanate, Polyisocyanatpartikel, die an ihrer Oberfläche durch Harnstoffbildung und/oder Blockierung desaktivierte Isocyanatgruppen enthalten, Nonyltriisocyanat (NTI) und Addukte von Polyisocyanaten mit isocyanatreaktiven funktionellen Gruppen enthaltenden Dioxanen, Dioxolanen und Oxazolidinen in Betracht. Ganz besonders bevorzugt werden cycloaliphatische, Polyisocyanate, insbesondere auf Basis von Dicyclohexylmethandiisocyanat oder Isophorondiisocyanat, verwendet.

Der Verlustfaktor tanδ kann vom Fachmann durch Auswahl von Art und Anteil der flexibilisierenden und hartmachenden Segmenten in den Bindemitteln und/oder den Vernetzungsmitteln eingestellt werden. Im allgemeinen gilt, dass der Verlustfaktor tanδ umso höher wird, je höher der Anteil an flexibilisierenden Segmenten ist. Er wird somit auch durch die Glasübergangstemperaturen Tg der Bindemittel und/oder Vernetzungsmittel beeinflusst. Beispiele für flexibilisierende Segmente sind die vorstehend beschriebenen. Ein Beispiel für ein Vernetzungsmittel mit flexibilisierenden Segmenten ist Hexamethylendiisocyanat. Flexibilisierend wirken beispielsweise auch 4-Hydroxybutyl(meth)acrylat oder die üblichen und bekannten Polysiloxanmakromonomeren eines zahlenmittleren Molekulargewichts von 1.000 bis 40.000.

Art und Anteil der flexibilisierenden und hartmachenden Segmenten können auch Einfluss auf den Speichermodul E' haben. Diese Wechselwirkung kann vom Fachmann mit Hilfe einiger weniger empirischer Untersuchungen so beeinflusst werden, dass der erfindungsgemäß einzustellende Speichermodul E' und der erfindungsgemäß einzustellende Verlustfaktor tanδ in einfacher Weise eingestellt werden können.

Die erfindungsgemäß zu verwendenden Dual-Cure-Stoffgemische enthalten mindestens einen Fotoinitiator, vorzugsweise mindestens zwei, Fotoinitiatoren in einer Menge von vorzugsweise 0,05 bis 8, bevorzugt 0,1 bis 5, besonders bevorzugt 0,2 bis 3 und insbesondere 0,5 bis 2 Gew.-%, jeweils bezogen auf den Festkörper des erfindungsgemäßen Beschichtungsstoffs. Beispiele geeigneter Fotoinitiatoren werden beispielsweise in Römpp Lexikon Lacke und Druckfarben, Georg Thieme Verlag, Stuttgart, New York, 1998, Seiten 444 bis 446, beschrieben.

Darüber hinaus kann das erfindungsgemäß zu verwendende Dual-Cure-Stoffgemisch noch mindestens einen Zusatzstoff, ausgewählt aus der Gruppe, bestehend aus physikalisch härtenden, von den vorstehend beschriebenen Bindemitteln verschiedenen Bindemitteln; von den vorstehend beschriebenen Isocyanatoacrylaten und Polyisocyanaten verschiedenen Vernetzungsmitteln; thermisch härtbaren Reaktivverdünnern; molekulardispers löslichen Farbstoffen; Lichtschutzmitteln, wie UV-Absorbern und reversiblen Radikalfängern (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln, enthalten.

Diese und weitere geeignete Zusatzstoffe werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Die erfindungsgemäß zu verwendenden Dual-Cure-Stoffgemische, die die vorstehend beschriebenen Bestandteile enthalten, werden insbesondere als Klarlacke für die Herstellung von Klarlackierungen oder als Ausgangsprodukte für die Herstellung von klaren, transparenten Folien und Formteilen verwendet.

Die erfindungsgemäß zu verwendenden Dual-Cure-Beschichtungsstoffe können indes auch pigmentiert sein. Vorzugsweise enthalten sie dann noch mindestens ein Pigment, ausgewählt aus der Gruppe, bestehend aus organischen und anorganischen, transparenten und deckenden, farb- und/oder effektgebenden, elektrisch leitfähigen, magnetisch abschirmenden und fluoreszierenden Pigmenten, Füllstoffen und Nanopartikeln.

Die pigmentierten erfindungsgemäß zu verwendenden Dual-Cure-Stoffgemische werden insbesondere als Elektrotrauchlacke, Füller, Basislacke und Unidecklacke zur Herstellung von Elektrotrauchlackierungen, Füllerlackierungen oder Steinschlagschutzgrundierungen, Basislackierungen und Unidecklackierungen oder zur Herstellung von pigmentierten Folien und Formteilen eingesetzt.

Werden ausschließlich nicht deckende, transparente Pigmente, insbesondere Nanopartikel, verwendet, können die pigmentierten erfindungsgemäß zu verwendenden Dual-Cure-Stoffgemische auch als Klarlacke oder für die Herstellung von klaren, transparenten Folien und Formteilen verwendet werden.

Methodisch weist die Herstellung der erfindungsgemäß zu verwendenden Dual-Cure-Stoffgemische keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer vorzugsweise unter Ausschluss von aktinischer Strahlung.

Die resultierenden erfindungsgemäß zu verwendenden Dual-Cure-Stoffgemische sind konventionelle, organische Lösemittel enthaltende Stoffgemische, wäßrige Stoffgemische, im wesentlichen oder völlig lösemittel- und wasserfreie flüssige Stoffgemische (100%-Systeme), im wesentlichen oder völlig lösemittel- und wasserfreie feste Pulver oder im wesentlichen oder völlig lösemittelfreie Pulversuspensionen (Pulverslurries). Außerdem können sie Einkomponentensysteme, in denen die Bindemittel und die Vernetzungsmittel nebeneinander vorliegen, oder Zwei- oder Mehrkomponentensysteme, in denen die Bindemittel und die Vernetzungsmittel bis kurz vor der Applikation getrennt voneinander vorliegen, sein.

Bei dem erfindungsgemäßen Verfahren werden die erfindungsgemäß zu verwendenden Dual-Cure-Stoffgemische auf übliche und bekannte temporäre oder permanente Substrate appliziert. Vorzugsweise werden für die Herstellung von erfindungsgemäßen Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden. Werden die erfindungsgemäß zu verwendenden Dual-Cure-Stoffgemische für die Herstellung von Beschichtungen, Klebstoffen und Dichtungen verwendet, werden permanente Substrate eingesetzt, wie Kraftfahrzeugkarosserien und Teile hiervon, Bauwerke im Innen- und Außenbereich und Teile hiervon, Türen, Fenster, Möbel, Glashohlkörper, Coils, Container, Emballagen, Kleinteile, elektrotechnische Bauteile und Bauteile für weiße Ware. Die erfindungsgemäßen Folien und Formteile können ebenfalls als Substrate dienen.

Methodisch weist die Applikation der im erfindungsgemäßen Verfahren zu verwendenden Dual-Cure-Stoffgemische keine Besonderheiten auf, sondern kann durch alle üblichen und bekannten, für das jeweilige Stoffgemisch geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt, es sei denn es handelt sich um Pulver.

Auch die Applikation der Pulver weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich, unter Ausschluss von aktinischer Strahlung zu arbeiten, um eine vorzeitige Vernetzung der erfindungsgemäß zu verwendenden Dual-Cure-Stoffgemische zu vermeiden.

Die Härtung der im erfindungsgemäßen Verfahren angewandten Dual-Cure-Stoffgemische erfolgt im allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung der applizierten Dual-Cure-Stoffgemische und zum Verdunsten von flüchtigen Bestandteilen wie gegebenenfalls vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Im Rahmen des erfindungsgemäßen Verfahrens erfolgt die thermische Härtung der applizierten Dual-Cure-Stoffgemische beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Erfindungsgemäß werden die applizierten Dual-Cure-Stoffgemische mit einer UV-Strahlung gehärtet, deren Spektrum neben UV-A und UV-B einen UV-C-Anteil aufweist, der im Wellenlängenbereich von 200 bis 280 nm 2 bis 80%, vorzugsweise 5 bis 60% und insbesondere 10 bis 40% der relativen spektralen Strahldichte des Spektrums einer Quecksilbermitteldruckdampflampe in diesem Wellenlängenbereich hat, wobei in dem Wellenlängenbereich von 200 bis 240 nm die relative spektrale Strahldichte des UV-C-Anteils stets kleiner als die relative spektrale Strahldichte des Spektrums einer Quecksilbermitteldruckdampflampe in diesem Wellenlängenbereich ist (vgl. R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998).

Besonders bevorzugt ist auch in dem Wellenlängebereich von 240 bis 280 nm die relative spektrale Strahldichte des UV-C-Anteils stets kleiner als die relative spektrale Strahldichte des Spektrums einer Quecksilbermitteldruckdampflampe in diesem Wellenlängebereich.

Ganz besonders bevorzugt weist der UV-C-Anteil im Wellenlängebereich < 200 nm eine relative spektrale Strahldichte von Null oder nahezu Null auf. Der Begriff »nahezu Null« bedeutet, dass die Strahlung in dem Wellenlängebereich < 200 nm keinen oder einen vernachlässigbar geringen Einfluss auf die Anwendung technischen Eigenschaften der erfindungsgemäßen Materialien hat.

Erfindungsgemäß wird bei der Bestrahlung eine Strahlendosis von 100 bis 6.000, vorzugsweise 200 bis 3.000, bevorzugt 300 bis 1.500 und besonders bevorzugt 500 bis 1.200 mJcm$^{-2}$ eingesetzt, wobei der Bereich < 1.200 mJcm$^{-2}$ ganz besonders bevorzugt ist.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise liegt die Strahlenintensität bei $1 \times 10^0$ bis $3 \times 10^5$, bevorzugt $2 \times 10^0$ bis $2 \times 10^5$, besonders bevorzugt $3 \times 10^0$ bis $1,5 \times 10^5$ und insbesondere $5 \times 10^0$ bis $1,2 \times 10^5$ $Wm^{-2}$.

Als Strahlenquellen für die erfindungsgemäß zu verwendende UV-Strahlung müssen galliumdotierte und/oder eisendotierte Quecksilbermitteldruckdampflampen verwendet werden, die als solche das betreffende Spektrum abstrahlen. Es können aber auch Kombinationen von mindestens zwei UV-Lampen verwendet werden, die zwar nicht die erfindungsgemäß zu verwendende UV-Strahlung emittieren, deren Spektren sich indes zu der erfindungsgemäß zu verwendenden UV-Strahlung addieren. Des weiteren können UV-Lampen verwendet werden, bei denen das gewünschte Spektrum mit Hilfe von Filtern eingestellt wird. Es kommen auch Blitzlampen in Betracht, die aber erfindungsgemäß weniger bevorzugt sind. Vorzugsweise werden als UV-Lampen Quecksilberdampflampen, bevorzugt Quecksilbernieder-, -mittel- und -hochdruckdampflampen, insbesondere Quecksilbermitteldruckdampflampen, verwendet. Besonders bevorzugt werden unmodifizierte Quecksilberdampflampen plus geeignete Filter oder modifizierte, insbesondere dotierte, Quecksilberdampflampen verwendet.

Vorzugsweise werden Quecksilbermitteldruckdampflampen verwendet, die UV-C-Strahlung liefern, die die erfindungsgemäß zu verwendende relative spektrale Strahldichte hat. Erfindungsgemäß werden galliumdotierte und/oder eisendotierte, insbesondere eisendotierte, Quecksilberdampflampen verwendet, wie sie beispielsweise in R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998, beschrieben werden.

Beispiele geeigneter Blitzlampen sind Blitzlampen der Firma VISIT.

Der Abstand der UV-Lampen von den applizierten erfindungsgemäß zu verwendenden Dual-Cure-Stoffgemischen kann überraschend breit variieren und daher sehr gut auf die Erfordernisse des Einzelfalls eingestellt werden. Vorzugsweise liegt der Abstand bei 2 bis 200, bevorzugt 5 bis 100, besonders bevorzugt 10 bis 50 und insbesondere 15 bis 30 cm. Deren Anordnung kann außerdem den Gegebenheiten des Substrats und der Verfahrensparameter angepaßt werden. Bei kompliziert geformten Substraten, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden.

Vorzugsweise wird im Rahmen des erfindungsgemäßen Verfahrens die Bestrahlung unter einer sauerstoffabgereicherten Atmosphäre durchgeführt.

"Sauerstoffabgereichert" bedeutet, dass der Gehalt der Atmosphäre an Sauerstoff geringer ist als der Sauerstoffgehalt von Luft (20,95 Vol.-%). Vorzugsweise liegt der maximale Gehalt der sauerstoffabgereicherten Atmosphäre bei 18, bevorzugt 16, besonders bevorzugt 14, ganz besonders bevorzugt 10 und insbesondere 6,0 Vol.-%.

Die Atmosphäre kann im Grunde sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen Beschichtungen entstehen können. Es ist daher von Vorteil, den Sauerstoffgehalt der Atmosphäre nicht auf Null Vol.-% abzusenken.

Vorzugsweise liegt der minimale Gehalt an Sauerstoff bei 0,1, bevorzugt 0,5, besonders bevorzugt 1,0, ganz besonders bevorzugt 1,5 und insbesondere 2,0 Vol-%.

Die sauerstoffabgereicherte Atmosphäre kann in unterschiedlicher Weise bereitgestellt werden. Beispielsweise kann ein entsprechendes Gasgemisch hergestellt und in Druckflaschen zur Verfügung gestellt werden. Vorzugsweise wird die Abreicherung erzielt, indem man mindestens ein Inertgas in den jeweils erforderlichen Mengen in das über der Oberfläche der zu härtenden Schichten befindliche Luftpolster einbringt. Der Sauerstoffgehalt der über der betreffenden Oberfläche befindlichen Atmosphäre kann mit Hilfe üblicher und bekannter Methoden und Vorrichtungen zur Bestimmung von elementarem Sauerstoff kontinuierlich gemessen und ggf. automatisch auf den erwünschten Wert eingestellt werden.

Unter Inertgas wird ein Gas verstanden, das unter den angewandten Härtungsbedingungen durch die aktinische Strahlung nicht zersetzt wird, die Härtung nicht inhibiert und/oder nicht mit den erfindungsgemäß zu verwendenden Dual-Cure-Stoffgemischen reagiert. Vorzugsweise werden Stickstoff, Kohlendioxid, Helium, Neon oder Argon, insbesondere Stickstoff und/oder Kohlendioxid, verwendet.

Sowohl die thermische Härtung als auch die Härtung mit aktinischer Strahlung können stufenweise durchgeführt werden. Dabei können sie hintereinander (sequenziell) oder gleichzeitig erfolgen. Erfindungsgemäß ist die sequenzielle Härtung von Vorteil und wird deshalb bevorzugt verwendet. Es ist dabei von besonderem Vorteil, die thermische Härtung nach der Härtung mit aktinischer Strahlung durchzuführen.

Im Rahmen des erfindungsgemäßen Verfahrens werden die erfindungsgemäß zu verwendenden Dual-Cure-Stoffgemische bevorzugt zur Herstellung von Formteilen und Folien oder als Beschichtungsstoffe, Klebstoffe und Dichtungsmassen zur Herstellung von Beschichtungen, Klebschichten und Dichtungen verwendet. Die resultierenden erfindungsgemäßen Folien, Formteile, Beschichtungen, Klebschichten und Dichtungen eignen sich hervorragend für das Beschichten, Verkleben, Abdichten, Umhüllen und Verpacken von Kraftfahrzeugkarosserien und Teile hiervon, Bauwerken im Innen- und Außenbereich und Teilen hiervon, Türen, Fenstern, Möbeln, Glashohlkörpem, Coils, Container, Emballagen, Kleinteilen, wie Muttern, Schrauben, Felgen oder Radkappen, elektrotechnischen Bauteilen, wie Wickelgüter (Spulen, Statoren, Rotoren) und Bauteilen für weiße Ware, wie Radiatoren, Haushaltsgeräte, Kühlschrankverkleidungen oder Waschmaschinenverkleidungen.

Vor allem aber werden die erfindungsgemäß zu verwendenden Dual-Cure-Stoffgemische als Beschichtungsstoffe, insbesondere als Elektrotrauchlacke, Füller, Steinschlagschutzgrundierungen, Unibasislacke, Wasserbasislacke und/oder Klarlacke, insbesondere Klarlacke, zur Herstellung farb- und/oder effektgebender, elektrisch leitfähiger, magnetisch abschirmender oder fluoreszierender Ein- oder Mehrschichtlackierungen, insbesondere farb- und/oder effektgebender Mehrschichtlackierungen, eingesetzt. Für die Herstellung der Mehrschichtlackierungen können übliche und bekannte Nass-in-nass-Verfahren und Lackaufbauten angewandt werden. Es ist ein ganz wesentlicher Vorteil des erfindungsgemäßen Verfahrens, dass sämtliche Schichten der erfindungsgemäßen Mehrschichtlackierungen aus den erfindungsgemäß zu verwendenden Dual-Cure-Stoffgemischen hergestellt werden können.

Von besonderem Vorteil ist es, die Klarlackierung aus den Dual-Cure-Stoffgemischen nach dem erfindungsgemäßen Verfahren herzustellen. Bei den Klarlackierungen handelt es sich üblicherweise um die äußersten Schichten von Mehrschichtlackierungen, die wesentlich den optischen Gesamteindruck (Appearance) bestimmen und die farb- und/oder effektgebenden Schichten vor mechanischer und chemischer Schädigung und Schädigung durch Strahlung schützen. Deswegen machen sich auch Defizite in der Härte, Kratzfestigkeit, Chemikalienbeständigkeit und der Stabilität gegenüber Vergilbung bei der Klarlackierung besonders stark bemerkbar. So aber weisen die erfindungsgemäßen Klarlackierungen nur eine geringe Vergilbung auf; insbesondere ist ihr Gelbwert nach DIN 6167 < 2. Sie sind hoch kratzfest und zeigen nach dem Zerkratzen nur sehr geringe Glanzverluste. Insbesondere ist der Glanzverlust im Sandtest < 15 Einheiten und im Waschstraßensimulationstest nach Amtec/Kistler vor dem Abwischen mit Ethanol < 35 Einheiten nach dem Abwischen mit Ethanol < 10 Einheiten. Gleichzeitig haben sie eine hohe Härte. Insbesondere ist die Mikroeindringhärte (Universalhärte bei 25,6 mN, Fischerscope 100V mit Diamantenpyramide nach Vickers) > 100. Nicht zuletzt haben sie eine besonders hohe Chemikalienfestigkeit und werden durch Schwefelsäure erst ab einer Temperatur von 50 °C geschädigt.

Erfindungsgemäß wird dieses vorteilhafte Eigenschaftsprofil dadurch erzielt, dass die erfindungsgemäß zu verwendenden Dual-Cure-Stoffgemische eines solche stoffliche Zusammensetzung haben, dass die hieraus hergestellten freien gehärteten Filme einen Speichermodul E' im gummielastischen Bereich von mindestens $10^{7,5}$ Pa und einen Verlustfaktor tanδ bei 20 °C von maximal 0,10 aufweisen, wobei das Speichermodul E' und der Verlustfaktor mit der Dynamisch-Mechanischen Thermo-Analyse (DMTA) an freien Filmen mit einer Schichtdicke von $40 \pm 10$ μm gemessen worden sind.

Die erfindungsgemäßen Substrate, die mit erfindungsgemäßen Beschichtungen beschichtet, mit erfindungsgemäßen Klebschichten verklebt, mit erfindungsgemäßen Dichtung abgedichtet und/oder mit erfindungsgemäßen Folien und/oder Formteilen umhüllt oder verpackt sind, weisen daher hervorragende Dauergebrauchseigenschaften und eine besonders lange Gebrauchsdauer auf.

**Beispiele**

**Herstellbeispiel 1**

**Die Herstellung eines Methacrylatcopolymerisats (Bindemittel)**

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflußkühler, wurde 650 Gewichtsteile einer Fraktion aromatischer Kohlenwasserstoffe mit einem Siedebereich von 158 bis 172 °C eingewogen. Das Lösemittel wurde auf 140 °C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteile Acrylsäure innerhalb von vier Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach der Beendigung des Initiatorzulaufs wurde die resultierende Reaktionsmischung während weiterer zwei Stunden auf 140 °C unter Rühren erhitzt und anschließend abgekühlt. Die resultierende Lösung des Methacrylatcopolymerisats (A) wurde mit einem Gemisch aus 1-Methoxypropylacetat-2, Butylglykolacetat und Butylacetat verdünnt.

Die resultierende Lösung wies einen Feststoffgehalt von 65 Gew.-%, bestimmt in einem Umluftofen (eine Stunde/130 °C), eine Säurezahl von 15 mg KOH/g Festkörper, eine OH-Zahl von 175 mg KOH/g Festkörper und eine Glasübergangstemperatur von -21 °C auf.

**Herstellbeispiel 2**

**Die Herstellung eines erfindungsgemäß zu verwendenden Dual-Cure-Klarlacks**

Der Klarlack wurde durch das Vermischen der in der Tabelle angegebenen Bestandteile in der angegebenen Reihenfolge und Homogenisieren der resultierenden Mischung hergestellt.

**Tabelle: Die stofflichen Zusammensetzung des Klarlacks**

| Bestandteil | Gewichtsteile Herstellbeispiel 2 |
|---|---|
| Stammlack: | |
| Methacrylatcopolymerisat des Herstellbeispiels 1 | 35,9 |
| Dipentaerythritpentaacrylat | 20 |
| UV-Absorber (substituiertes Hydroxyphenyltriazin) | 1,0 |
| HALS (N-Methyl-2,2,6,6-tetramethylpiperidinylester) | 1,0 |
| Netzmittel (Byk ® 306 der Firma Byk Chemie) | 0,4 |
| Butylacetat | 27,4 |
| Solventnaphtha ® | 12,8 |
| Irgacure ® 184 (handelsüblicher Fotoinitiator der Firma Ciba Specialty Chemicals) | 1,0 |
| Lucirin ® TPO (handelsüblicher Photoinitiator der Firma BASF AG) | 0,5 |
| **Summe:** | **100** |
| Vernetzungsmittelkomponente: | |
| **Summe:** | **38,28** |
| Vernetzungsmittel 1: | |
| Isocyanatoacrylat Roskydal ® UA VPLS 2337 der Firma Bayer AG (Basis: Trimeres Hexamethylen-diisocyanat; Gehalt an Isocyanatgruppen: 12 Gew.-%) | 27,84 |
| Vernetzungsmittel 2: | |
| Isocyanatoacrylat Roskydal ® UA VP FWO 3003-77 der Firma Bayer AG (Basis; Trimeres von Isophorondiisocyanat (70,5 %ig in Butylacetat; Viskosität: 1.500 mPas; Gehalt an Isocyanatgruppen: 6,7 Gew.-%) | 6,96 |
| Verdünner | 3,48 |

Der Klarlack wies eine sehr gute Topfzeit und ein sehr gutes Applikationsverhalten auf. Sein Doppelbindungsgehalt lag bei 1,63 mEqu/g Festkörper.

Von diesem Klarlack wurde ein freier, über Polypropylen applizierter Film mit einer Schichtdicke von 40 $\pm$ 10 $\mu$m hergestellt und mittels DMTA untersucht. Die Aushärtung des Film erfolgt dabei durch Bestrahlung mit UV-Licht einer Dosis von 1.000 mJcm$^{-2}$ und einer Strahlenintensität von 83 Wm$^{-2}$ mit der eisendotierten Quecksilbermitteldruckdampflampe, Typ CK III, der Firma IST und einer abschließenden thermischen Härtung während 30 Minuten bei 120 °C. Die eisendotierte Quecksilbermitteldruckdampflampe hatte im Wellenlängebereich von 200 bis 280 nm eine relative spektrale Strahldichte von kleiner 40% der relativen spektralen Strahldichte der undotierten Quecksilbermitteldruckdampflampe, Typ CK, der Firma IST. In dem Wellenlängebereich von 200 bis 240 nm war die relative spektrale Strahldichte der eisendotierten Quecksilbermitteldruckdampflampe CK III stets kleiner als die relative spektrale Strahldichte der undotierten Quecksilbermitteldruckdampflampe CK.

Von dem homogenen, ausgehärteten freien Film wurden mittels DMTA-Messungen die viskoelastischen Kenngrößen unter den folgenden Bedingungen ermittelt:

1. Gerät: DMA MK IV (Firma Rheometric Scientific)
2. Bedingungen: Tensile mode, Amplitude 0,2%, Frequenz 1 Hz
3. Temperatur-Rampe: 1°C/min von Raumtemperatur bis 200°C.

Das so ermittelte Speichermodul E' im gummielastischen Bereich lag bei $10^{8,5}$ Pa und der Verlustfaktor tan$\delta$ bei 20 °C bei 0,04.

**Beispiel**

**Die Herstellung einer schwarzen und einer weißen Mehrschichtlackierung mit einer erfindungsgemäßen Klarlackierung**

Zur Herstellung der erfindungsgemäßen Mehrschichtlackierungen wurden Stahltafeln nacheinander mit einer kathodisch abgeschiedenen und während 20 Minuten bei 170 °C eingebrannten Elektrotauchlackierung einer Trockenschichtdicke von 18 bis 22 $\mu$m beschichtet. Anschließend wurden die Stahltafeln mit einem handelsüblichen Zweikomponenten-Wasserfüller von BASF Coatings AG, wie er üblicherweise für Kunststoffsubstrate verwendet wird, beschichtet. Die resultierende Füllerschicht wurde während 30 Minuten bei 90 °C eingebrannt, so dass eine Trockenschichtdicke von 35 bis 40 $\mu$m resultierte. Hiernach wurde zum einen ein handelsüblicher schwarzer Wasserbasislack von BASF Coatings AG und zum anderen ein handelsüblicher weißer Wasserbasislack von BASF Coatings AG mit einer Schichtdicke von jeweils 12 bis 15 $\mu$m appliziert, wonach die resultierenden Wasserbasislackschichten während zehn Minuten bei 80 °C abgelüftet wurden. Anschließend wurde der Klarlack des Herstellbeispiels 2 mit einer Schichtdicke von jeweils 40 bis 45 $\mu$m in einem Kreuzgang mit einer Fließbecherpistole pneumatisch appliziert. Die Härtung der Wasserbasislackschichten und der Klarlackschichten erfolgte während 5 Minuten bei Raumtemperatur, während 10 Minuten bei 80 °C, gefolgt von einer Bestrahlung mit UV-Licht einer Dosis von 1.000 mJcm$^{-2}$ und einer Strahlenintensität von 83 Wm$^{-2}$ mit einer eisendotierten Quecksilberdampflampe der Firma IST, und abschließend während 20 Minuten bei 140 °C.

Glanz, Kratzfestigkeit, Härte und Chemikalienbeständigkeit wurden an den Prüftafeln mit den schwarzen und weißen Mehrschichtlackierungen gemessen. Die Vergilbung wurde an den Prüftafeln mit der weißen Mehrschichtlackierung bestimmt.

Die erfindungsgemäßen Mehrschichtlackierungen wiesen ein hervorragendes Eigenschaftsprofil auf.

Sie waren sehr brillant und wiesen einen Glanz (20 °) nach DIN 67530 von 90,5 auf. Die Mikroeindringhärte (Universalhärte bei 25,6 mN, Fischerscope 100V mit Diamantenpyramide nach Vickers) lag bei 139.

Die Kratzfestigkeit wurde mit Hilfe des Sandtests (vgl. die deutsche Patentanmeldung DE 198 39 453 A 1, Seite 9, Zeilen 1 bis 63) anhand der vorstehend beschriebenen Prüfbleche beurteilt. Der Glanzverlust nach Beschädigung lag bei nur 5 Einheiten (20°).

Außerdem wurde die Kratzfestigkeit mit Hilfe des Bürstentests (vgl. die deutsche Patentanmeldung DE 198 39 453 A 1, Seite 9, Zeilen 17 bis 63) anhand der vorstehend beschriebenen Prüfbleche beurteilt. Es war kein Glanzverlust zu beobachten.

Bei dem Waschstraßensimulationstest wurde eine Laborwaschstraße der Firma Amtec Kistler verwendet (vgl. T. Klimmasch, T. Engbert, Technologietage, Köln, DFO, Berichtsband 32, Seiten 59 bis 66, 1997). Der Glanzverlust nach mit Reinigung mit Ethanol lag bei 4 Einheiten, ohne Reinigung bei 25 Einheiten.

Bei dem in der Fachwelt bekannten Daimlerchrysler-Gradientenofentest zeigten sich erste Beschädigungen der erfindungsgemäßen Mehrschichtlackierungen durch Schwefelsäure erst ab einer Temperatur von 53 °C.

Der Gelbwert der weißen Mehrschichtlackierung nach DIN 6167 lag bei 1,2. Er wurde unmittelbar nach der thermischen Härtung ermittelt.

Insgesamt untermauern die erhaltenen Ergebnisse die hohe Kratzfestigkeit, die hohe Härte, die hohe Chemikalienbeständigkeit und die geringe Vergilbungsneigung der erfindungsgemäßen Mehrschichtlackierungen.

**Patentansprüche**

1. Verfahren zur Herstellung gehärteter Materialien aus einem thermisch und mit aktinischer Strahlung härtbaren Stoffgemisch durch Erhitzen und Bestrahlung mit UV-Strahlung, **dadurch gekennzeichnet, dass** man

   (1) ein thermisch und mit aktinischer Strahlung härtbares Stoffgemisch verwendet, das einen Gehalt an mit aktinischer Strahlung aktivierbaren Bindungen von 0,5 bis 6 mEqu/g Festkörper hat, und/oder aus 5 bis 95 Gew.%, bezogen auf den in dem Dual-Cure-Stoffgemisch vorliegenden Anteil an thermisch härtbaren Bestandteilen, mindestens eines thermisch härtbaren Bestandteils besteht, welcher in Bezug auf die thermische Vernetzung eine Funktionalität von größer 2 aufweist und

   (2) die Bestrahlung mit einer UV-Strahlung durchführt, deren Spektrum neben UV-A und UV-B einen UV-C-Anteil aufweist, der im Wellenlängenbereich von 200 bis 280 nm 2 bis 80% der relativen spektralen Strahldichte des Spektrums einer Quecksilbermitteldruckdampflampe in diesem Wellenlängenbereich hat, wobei galliumdotierte und/oder eisendotierte Quecksilbermitteldruckdampflampen verwendet werden, und

   (3) die Strahlendosis bei 100 bis 6.000 mJcm-2 liegt.

2. Verfahren nach Anspruch 1, **dadurch gekennzeichnet, dass**

(4) die Strahlenintensität bei $1 \times 10^0$ bis $3 \times 10^5$ Wm$^{-2}$ liegt.

3. Verfahren nach Anspruch 1 oder 2, **dadurch gekennzeichnet, dass** das thermisch und mit aktinischer Strahlung härtbare Stoffgemisch einen Gehalt an mit aktinischer Strahlung aktivierbaren Bindungen bei 1 bis 4 mEqu/g Festkörper hat.

4. Verfahren nach einem der Ansprüche 1 bis 3, **dadurch gekennzeichnet, dass** die mit aktinischer Strahlung aktivierbaren Bindungen Kohlenstoff-Kohlenstoff-Doppelbindungen sind.

5. Verfahren nach einem der Ansprüche 1 bis 4, **dadurch gekennzeichnet, dass** die Strahlendosis bei 300 bis 1.500 mJcm$^{-2}$ liegt.

6. Verfahren nach einem der Ansprüche 1 bis 5, **dadurch gekennzeichnet, dass** die Strahlendosis < 1.200 mJcm$^{-2}$ ist.

7. Verfahren nach einem der Ansprüche 1 bis 6, **dadurch gekennzeichnet, dass** die Strahlenintensität bei 5 bis $1,2 \times 10^5$ Wm$^{-2}$ liegt.

8. Verfahren nach einem der Ansprüche 1 bis 7, **dadurch gekennzeichnet, dass** der UV-C-Anteil der im Wellenlängenbereich von 200 bis 280 nm 5 bis 60% der relativen spektralen Strahldichte des Spektrums einer Quecksilbermitteldruckdampflampe in diesem Wellenlängenbereich hat.

9. Verfahren nach Anspruch 8, **dadurch gekennzeichnet, dass** der UV-C-Anteil der im Wellenlängenbereich von 200 bis 280 nm 10 bis 40% der relativen spektralen Strahldichte des Spektrums einer Quecksilbermitteldruckdampflampe in diesem Wellenlängenbereich hat.

10. Verfahren nach einem der Ansprüche 1 bis 9, **dadurch gekennzeichnet, dass** auch in dem Wellenlängenbereich von 240 bis 280 nm die relative spektrale Strahldichte des UV-C-Anteils stets kleiner als die relative Spektraldichte des Spektrums einer Quecksilbermitteldruckdampflampe in diesem Wellenlängenbereich ist.

11. Verfahren nach einem der Ansprüche 1 bis 10, **dadurch gekennzeichnet, dass** der UV-C-Anteil im Wellenlängebereich < 200 nm eine relative spektrale Strahldichte von Null oder nahezu Null hat.

12. Verfahren nach einem der Ansprüche 1 bis 11, **dadurch gekennzeichnet, dass** das thermisch und mit aktinischer Strahlung härtbare Stoffgemisch

- mindestens ein hydroxylgruppenhaltiges (Meth)Acrylatcopolymerisat,
- ein Gemisch aus mindestens einem Isocyanatoacrylat, enthaltend flexibilisierende Segmente, und mindestens einem Isocyanatoacrylat, enthaltend hartmachende Segmente,
- mindestens einen Reaktivverdünner und
- mindestens einen Fotoinitiator sowie gegebenfalls
- mindestens ein aliphatisches und/oder cycloaliphatisches Polyisocyanat,

enthält.

13. Verfahren nach einem der Ansprüche 1 bis 12, **dadurch gekennzeichnet, dass** die thermisch und mit aktinischer Strahlung härtbaren Stoffgemische Beschichtungsstoffe, Klebstoffe, Dichtungsmassen und Ausgangsprodukte für Formteile und Folien sind.

14. Verfahren nach Anspruch 13, **dadurch gekennzeichnet, dass** die Beschichtungsstoffe Elektrotauchlacke, Füller oder Steinschlagschutzgrundierungen, Unidecklacke, Basislacke oder Klarlacke sind.

15. Verfahren zur Herstellung von gehärteten Materialien gemäß einem der Ansprüche 1 bis 14, **dadurch gekennzeichnet, dass** man

(I) das thermisch und mit aktinischer Strahlung härtbare Stoffgemisch (1) auf oder in ein temporäres oder permanentes Substrat appliziert

16. Verfahren nach Anspruch 15, **dadurch gekennzeichnet, dass** das Substrat temporär ist.

**17.** Verfahren nach einem der Ansprüche 1 bis 16, **dadurch gekennzeichnet, dass** man die Bestrahlung mit dotierten Quecksilberdampflampen durchführt.

**18.** Verfahren nach Anspruch 17, **dadurch gekennzeichnet, dass** die Bestrahlung mit einer galliumdotierten und/oder eisendotierten Quecksilberdampflampe durchgeführt wird.

**19.** Verfahren nach einem der Ansprüche 1 bis 18, dass nach der Bestrahlung eine thermische Härtung durchgeführt wird.

**20.** Verfahren nach einem der Ansprüche 1 bis 19, **dadurch gekennzeichnet, dass** die Bestrahlung unter Inertgas oder unter einer sauerstoffabgereicherten Atmosphäre erfolgt.

**21.** Verfahren nach Anspruch 20, **dadurch gekennzeichnet, dass** der Restsauerstoffgehält der sauerstoffabgereicherten Atmosphäre maximal 18 Vol.-% beträgt.

**22.** Verfahren nach Anspruch 21, **dadurch gekennzeichnet, dass** der Restsauerstoffgehalt der sauerstoffabgereicherten Atmosphäre maximal 5 Vol.-% beträgt.

**23.** Verfahren nach einem der Ansprüche 15 bis 23, **dadurch gekennzeichnet, dass** die Substrate aus Metall, Kunststoff, Glas, Holz, Textil, Leder, Natur- und Kunststein, Beton, Zement oder Verbunden dieser Materialien bestehen.

**24.** Verfahren nach einem der Ansprüche 16 bis 23, **dadurch gekennzeichnet, dass** die Formteile und Folien von den temporären Substraten entfernt werden.

**25.** Verfahren nach einem der Ansprüche 15 bis 23, **dadurch gekennzeichnet, dass** die permanenten Substrate Kraftfahrzeugkarosserien und Teile hiervon, Bauwerke im Innen- und Außenbereich und Teile hiervon, Türen, Fenster, Möbel, Glasholkörper, Coils, Container, Emballagen, Kleinteile, elektrotechnische Bauteile und Bauteile für weiße Ware sind.

**26.** Gehärtete Materialien, herstellbar nach den Verfahren nach einem der Ansprüche 1 bis 25, **dadurch gekennzeichnet, dass** sie einen Speichermodul E' im gummielastischen Bereich von mindestens $10^{7,5}$ Pa und einen Verlustfaktor tan$\delta$ bei 20 °C von maximal 0,10 aufweisen, wobei der Speichermodul E' und der Verlustfaktor tan$\delta$ mit der Dynamisch-Mechanischen Thermo-Analyse (DMTA) an freien Filmen mit einer Schichtdicke von $40\pm10$ $\mu$m und bei einer Frequenz von 1 Hz gemessen worden sind.

**27.** Gehärtete Materialien nach Anspruch 26, **dadurch gekennzeichnet, dass** der Speichermodul im gummielastischen Bereich mindestens $10^{7,6}$ Pa beträgt.

**28.** Gehärtete Materialien nach Anspruch 27, **dadurch gekennzeichnet, dass** der Speichermodul im gummielastischen Bereich mindestens $10^{8,0}$ Pa beträgt.

**29.** Gehärtete Materialien nach einem der Ansprüche 26 bis 28, **dadurch gekennzeichnet, dass** der Verlustfaktor tan$\delta$ bei 20 °C maximal 0,06 ist.

**30.** Gehärtete Materialien nach einem der Ansprüche 26 bis 39, **dadurch gekennzeichnet, dass** sie Beschichtungen, Klebschichten, Dichtungen, Formteile und Folien sind.

**31.** Gehärtete Materialien nach Anspruch 30, **dadurch gekennzeichnet, dass** die Beschichtungen Elektrotauchlackierungen, Füllerlackierungen, Steinschlagschutzgrundierungen, Unidecklackierungen, Basislackierungen oder Klarlackierungen sind.

**32.** Gehärtete Materialien nach Anspruch 31, **dadurch gekennzeichnet, dass** die Beschichtungen farb- und/oder effektgebende Mehrschichtlackierungen sind.

**33.** Verwendung der gehärteten Materialien gemäß einem der Ansprüche 26 bis 32 für das Beschichten, Verkleben, Abdichten, Umhüllen und Verpacken von Kraftfahrzeugkarosserien und Teile hiervon, Bauwerken im Innen- und Außenbereich und Teilen hiervon, Türen, Fenstern, Möbeln, Glasholkörpem, Coils, Container, Emballagen, Kleinteilen, elektrotechnischen Bauteilen und Bauteilen für weiße Ware.

**Claims**

1.  Process for producing cured materials from a composition, curable thermally and with actinic radiation, by heating and exposure to UV radiation, **characterized in that**

    (1) a composition curable thermally and with actinic radiation is used which has an amount of bonds which can be activated with actinic radiation of from 0.5 to 6 meq/g solids, and/or consists of from 5 to 95% by weight, based in each case on the fraction of thermally curable constituents present in the dual-cure composition, of at least one thermally curable constituent which has a functionality in respect of thermal crosslinking of greater than 2.
    (2) exposure is carried out with UV radiation whose spectrum comprises, in addition to UV-A and UV-B, a UV-C fraction which in the wavelength range from 200 to 280 nm has from 2 to 80% of the relative spectral radiance of the spectrum of a medium pressure mercury vapour lamp within this wavelength range, gallium-doped and/or iron-doped medium pressure mercury vapour lamps being used, and
    (3) the radiation dose is from 100 to 6000 mJ cm$^{-2}$.

2.  Process according to Claim 1, **characterized in that**

    (4) the radiative intensity is from $1 \times 10^0$ to $3 \times 10^5$ W m$^{-2}$.

3.  Process according to Claim 1 or 2, **characterized in that** the composition curable thermally and with actinic radiation contains an amount of bonds which can be activated with actinic radiation of from 1 to 4 meq/g solids.

4.  Process according to any of Claims 1 to 3, **characterized in that** the bonds which can be activated with actinic radiation are carbon-carbon double bonds.

5.  Process according to any of Claims 1 to 4, **characterized in that** the radiation dose is from 300 to 1500 mJ cm$^{-2}$.

6.  Process according to any of Claims 1 to 5, **characterized in that** the radiation dose is <1200 mJ cm$^{-2}$.

7.  Process according to any of Claims 1 to 6, **characterized in that** the radiative intensity is from 5 to $1.2 \times 10^5$ W m$^{-2}$.

8.  Process according to any of Claims 1 to 7, **characterized in that** the UV-C fraction in the wavelength range from 200 to 280 nm has from 5 to 60% of the relative spectral radiance of the spectrum of a medium pressure mercury vapour lamp within this wavelength range.

9.  Process according to Claim 8, **characterized in that** the UV-C fraction in the wavelength range from 200 to 280 nm has from 10 to 40% of the relative spectral radiance of the spectrum of a medium pressure mercury vapour lamp within this wavelength range.

10. Process according to any of Claims 1 to 9, **characterized in that** the relative spectral radiance of the UV-C fraction in the wavelength range from 240 to 280 nm is also always less than the relative spectral density of the spectrum of a medium pressure mercury vapour lamp within this wavelength range.

11. Process according to any of Claims 1 to 10, **characterized in that** the UV-C fraction in the wavelength range <200 nm has a relative spectral radiance of zero or virtually zero.

12. Process according to any of Claims 1 to 11, **characterized in that** the composition curable thermally and with actinic radiation comprises

    - at least one hydroxyl-containing (meth)acrylate addition copolymer,
    - a mixture of at least one isocyanato acrylate containing flexibilizing segments and at least one isocyanato acrylate containing hardening segments,
    - at least one reactive diluent, and
    - at least one photoinitiator, and, if desired,
    - at least one aliphatic and/or cycloaliphatic polyisocyanate.

13. Process according to any of Claims 1 to 12, **characterized in that** the compositions curable thermally and with actinic radiation are coating materials, adhesives, sealing compounds, or starting products for mouldings or foils.

14. Process according to Claim 13, **characterized in that** the coating materials are electrocoat materials, surfacers or antistonechip primers, solid-colour topcoat materials, basecoat materials or clearcoat materials.

15. Process for producing cured materials according to any of Claims 1 to 14, which comprises

    (I) applying the composition (1) curable thermally and with actinic radiation onto or into a temporary or permanent substrate.

16. Process according to Claim 15, **characterized in that** the substrate is temporary.

17. Process according to any of Claims 1 to 16, **characterized in that** irradiation is carried out using doped mercury vapour lamps.

18. Process according to Claim 17, **characterized in that** irradiation is carried out using a gallium-doped and/or iron-doped mercury vapour lamp.

19. Process according to any of Claims 1 to 18, **characterized in that** a thermal cure is carried out following irradiation.

20. Process according to any of Claims 1 to 19, **characterized in that** irradiation takes place under inert gas or in an oxygen-depleted atmosphere.

21. Process according to Claim 20, **characterized in that** the residual oxygen content of the oxygen-depleted atmosphere is not more than 18% by volume.

22. Process according to Claim 21, **characterized in that** the residual oxygen content of the oxygen-depleted atmosphere is not more than 5% by volume.

23. Process according to any of Claims 15 to 23, **characterized in that** the substrates are of metal, plastic, glass, wood, textile, leather, natural stone, artificial stone, concrete, cement, or composites of these materials.

24. Process according to any of Claims 16 to 23, wherein the mouldings and foils are removed from the temporary substrates.

25. Process according to any of Claims 15 to 23, **characterized in that** the permanent substrates are motor vehicle bodies and parts thereof, the interior and exterior of buildings and parts thereof, doors, windows, furniture, hollow glassware, coils, containers, packaging, small parts, electrical components, and components for white goods.

26. Cured materials, producible by the processes according to any of Claims 1 to 25, **characterized in that** they have a storage modulus E' in the rubber-elastic range of at least $10^{7.5}$ Pa and a loss factor $\tan\delta$ at 20°C of not more than 0.10, the storage modulus E' and the loss factor $\tan\delta$ having been measured by means of dynamic mechanical thermoanalysis (DMTA) on free films with a thickness of $40 \pm 10\ \mu m$, and at a frequency of 1 Hz.

27. Cured materials according to Claim 26, **characterized in that** the storage modulus in the rubber-elastic range is at least $10^{7.6}$ Pa.

28. Cured materials according to Claim 27, **characterized in that** the storage modulus in the rubber-elastic range is at least $10^{8.0}$ Pa.

29. Cured materials according to any of Claims 26 to 28, **characterized in that** the loss factor $\tan\delta$ at 20°C is not more than 0.06.

30. Cured materials according to any of Claims 26 to 39, **characterized in that** they are coatings, adhesive films, seals, mouldings or foils.

31. Cured materials according to Claim 30, **characterized in that** the coatings are electrocoats, surfacer coats, antistonechip primer coats, solid-colour topcoats, basecoats or clearcoats.

**32.** Cured materials according to Claim 31, **characterized in that** the coatings are multicoat colour and/or effect paint systems.

**33.** Use of the cured materials according to any of claims 26 to 32 for coating, adhesively bonding, sealing, wrapping or packaging motor vehicle bodies and parts thereof, the interior and exterior of buildings and parts thereof, doors, windows, furniture, hollow glassware, coils, containers, packaging, small parts, electrical components or components for white goods.

**Revendications**

**1.** Procédé pour fabriquer des matériaux durcis à partir d'un mélange de substances apte à être durci thermiquement et par rayonnement actinique en chauffant et en irradiant par des UV, **caractérisé en ce que**

(1) l'on utilise un mélange de substances apte à être durci thermiquement et par rayonnement actinique et dont la teneur en liaisons activables par rayonnement actinique est comprise entre 0,5 et 6 méqu/g de corps solide et/ou est constitué de 5 à 95% en poids d'au moins un composant apte à être durci thermiquement et qui présente une fonctionnalité supérieure à 2 en termes de réticulation thermique par rapport à la teneur en composants aptes à être durcis thermiquement présents dans le mélange de substances à double durcissement, (2) l'on irradie par un rayonnement UV dont le spectre présente, outre des UV-A et des UV-B, une proportion d'UV-C qui, dans la plage des longueurs d'onde entre 200 et 280 nm, représente entre 2 et 80% de la densité spectrale relative du spectre du rayonnement d'une lampe à vapeur de mercure à pression moyenne dans cette plage de longueurs d'onde, des lampes à vapeur de mercure à pression moyenne dopées au gallium et/ou dopées au fer étant utilisées et (3) la dose de rayonnement est comprise entre 100 et 6 000 mJcm$^{-2}$.

**2.** Procédé selon la revendication 1, **caractérisé en ce que**

(4) l'intensité du rayonnement est comprise entre $1 \times 10^0$ et $3 \times 10^5$ Wm$^{-2}$.

**3.** Procédé selon la revendication 1 ou 2, **caractérisé en ce que** le mélange de substances apte à être durci thermiquement et par rayonnement actinique a une teneur en liaisons activables par rayonnement actinique comprise entre 1 et 4 méqu/g de corps solide.

**4.** Procédé selon l'une quelconque des revendications 1 à 3, **caractérisé en ce que** les liaisons activables par rayonnement actinique sont des doubles liaisons carbone-carbone.

**5.** Procédé selon l'une quelconque des revendications 1 à 4, **caractérisé en ce que** la dose de rayonnement est comprise entre 300 et 1 500 mJcm$^{-2}$.

**6.** Procédé selon l'une quelconque des revendications 1 à 5, **caractérisé en ce que** la dose de rayonnement est < 1 200 mJcm$^{-2}$.

**7.** Procédé selon l'une des revendications 1 à 6, **caractérisé en ce que** l'intensité du rayonnement est comprise entre 5 et $1,2 \times 10^5$ Wm$^{-2}$.

**8.** Procédé selon l'une des revendications 1 à 7, **caractérisé en ce que** dans la plage des longueurs d'onde entre 200 et 280 nm, la teneur en UV-C représente entre 5 et 60% de la densité spectrale relative du spectre du rayonnement d'une lampe à vapeur de mercure à pression moyenne dans cette plage de longueurs d'onde.

**9.** Procédé selon la revendication 8, **caractérisé en ce que** dans la plage des longueurs d'onde entre 200 et 280 nm, la teneur en UV-C représente entre 10 et 40% de la densité spectrale relative du spectre du rayonnement d'une lampe à vapeur de mercure à pression moyenne dans cette plage de longueurs d'onde.

**10.** Procédé selon l'une quelconque des revendications 1 à 9, **caractérisé en ce que** même dans la plage des longueurs d'onde entre 240 et 280 nm, la densité spectrale relative de rayonnement de la proportion d'UV-C est toujours inférieure à la densité spectrale relative du spectre d'une lampe à vapeur de mercure à pression moyenne dans cette plage de longueurs d'onde.

**11.** Procédé selon l'une quelconque des revendications 1 à 10, **caractérisé en ce que**, dans la plage des longueurs d'onde < 200 nm, la proportion d'UV-C a une densité spectrale relative de rayonnement nulle ou presque nulle.

**12.** Procédé selon l'une quelconque des revendications 1 à 11, **caractérisé en ce que** le mélange de substances apte à être durci thermiquement ou par rayonnement actinique contient:

- au moins un copolymère de (méth)acrylate qui présente des groupes hydroxyle,
- un mélange d'au moins un acrylate d'isocyanate qui contient des segments de flexibilisation et d'au moins un acrylate d'isocyanate qui contient des segments de durcissement,
- au moins un diluant réactif,
- au moins un photoinitiateur et
- le cas échéant au moins un polyisocyanate aliphatique et/ou cycloaliphatique.

**13.** Procédé selon l'une quelconque des revendications 1 à 12, **caractérisé en ce que** les mélanges de substances aptes à être durcis thermiquement et par rayonnement actinique sont des enduits, des substances adhésives, des pâtes d'étanchéité et des produits de départ pour pièces moulées et pour films.

**14.** Procédé selon la revendication 13, **caractérisé en ce que** les enduits sont des peintures d'électrophorèse, des charges, des peintures de fond pour la protection contre les impacts de pierres, des peintures en une seule couche, des peintures de base ou des vernis transparents.

**15.** Procédé pour fabriquer des matériaux durcis selon l'une quelconque des revendications 1 à 14, **caractérisé en ce que**

(I) l'on applique le mélange (1) de substances apte à être durci thermiquement et par rayonnement actinique sur ou dans un substrat temporaire ou permanent.

**16.** Procédé selon la revendication 15, **caractérisé en ce que** le substrat est temporaire.

**17.** Procédé selon l'une quelconque des revendications 1 à 16, **caractérisé en ce qu'**on irradie avec des lampes à vapeur de mercure dopées.

**18.** Procédé selon la revendication 17, **caractérisé en ce qu'**on irradie avec une lampe à vapeur de mercure dopée au gallium et/ou dopée au fer.

**19.** Procédé selon l'une quelconque des revendications 1 à 18, **caractérisé en ce que** l'on réalise un durcissement thermique après l'irradiation.

**20.** Procédé selon l'une quelconque des revendications 1 à 19, **caractérisé en ce que** l'irradiation a lieu dans un gaz inerte ou dans une atmosphère appauvrie en oxygène.

**21.** Procédé selon la revendication 20, **caractérisé en ce que** la teneur résiduelle en oxygène de l'atmosphère appauvrie en oxygène est d'au maximum 18% en volume.

**22.** Procédé selon la revendication 21, **caractérisé en ce que** la teneur résiduelle en oxygène de l'atmosphère appauvrie en oxygène est d'au maximum 5% en volume.

**23.** Procédé selon l'une quelconque des revendications 15 à 23, **caractérisé en ce que** les substrats sont constitués de métal, de matière synthétique, de verre, de bois, de textile, de cuir, de pierre naturelle ou synthétique, de béton, de ciment ou de composites de ces matériaux.

**24.** Procédé selon l'une quelconque des revendications 16 à 23, **caractérisé en ce que** les pièces moulées et les films sont retirées des substrats temporaires.

**25.** Procédé selon l'une quelconque des revendications 15 à 23, **caractérisé en ce que** les substrats permanents sont des carrosseries de véhicules automobiles ou des parties de celles-ci, des ouvrages de construction intérieure ou extérieure ou des parties de ceux-ci, des portes, des fenêtres, des meubles, des corps creux en verre, des bobines de tôle, des conteneurs, des emballages, de petits composants, des composants électrotechniques ou des composants pour gros appareils électroménagers.

**26.** Matériaux durcis que l'on peut fabriquer par le procédé selon l'une quelconque des revendications 1 à 25, **caractérisés en ce qu'**ils présentent un module d'accumulation E' dans la plage élastique d'au moins $10^{7,5}$ Pa et un facteur de perte tan $\delta$ à 20°C de maximum 0,10, le module d'accumulation E' et le facteur de perte tan $\delta$ étant mesurés par thermo-analyse dynamique-mécanique (DMTA) sur des films libres avec une épaisseur de couche de $40 \pm 10$ $\mu$m et à une fréquence de 1 Hz.

**27.** Matériaux durcis selon la revendication 26, **caractérisés en ce que** le module d'accumulation dans la plage élastique est d'au moins $10^{7,6}$ Pa.

**28.** Matériaux durcis selon la revendication 27, **caractérisés en ce que** le module d'accumulation dans la plage élastique est d'au moins $10^{8,0}$ Pa.

**29.** Matériaux durcis selon l'une quelconque des revendications 26 à 28, **caractérisés en ce que** le facteur de perte tan $\delta$ à 20°C est de maximum 0,06.

**30.** Matériaux durcis selon l'une quelconque des revendications 26 à 39, **caractérisés en ce qu'**il s'agit d'enduits, de couches adhésives, de joints d'étanchéité, de pièces moulées ou de films.

**31.** Matériaux durcis selon la revendication 30, **caractérisés en ce que** les enduits sont des peintures d'électrophorèse, des peintures de charge, des peintures de fond pour la protection contre les impacts de pierres, des peintures en une seule couche, des peintures de base ou des vernis transparents.

**32.** Matériaux durcis selon la revendication 31, **caractérisés en ce que** les enduits sont des peintures en plusieurs couches qui confèrent une couleur ou créent un effet.

**33.** Utilisation des matériaux durcis selon l'une quelconque des revendications 26 à 32 pour enduire, coller, rendre étanche, envelopper ou emballer des carrosseries de véhicules automobiles ou des parties de celles-ci, des ouvrages de construction intérieure ou extérieure ou des parties de ceux-ci, des portes, des fenêtres, des meubles, des corps en verre creux, des bobines de tôle, des conteneurs, des emballages, de petits composants, des composants électrotechniques et des composants pour gros appareils électroménagers.